# EUROPEAN PATENT SPECIFICATION

(11) **EP 3 810 458 B1**
(45) Date of publication and mention of the grant of the patent: **30.03.2022**
(21) Application number: 19745764.1
(22) Date of filing: 19.06.2019
(51) Int. Cl.: B60N 3/00, B60N 3/16

(54) **REMOVABLE KITCHEN FOR RECREATIONAL VEHICLES**
ABNEHMBARE KÜCHE FÜR FREIZEITFAHRZEUG
CUISINE AMOVIBLE POUR VEHICULE DE LOISIRS

(30) Priority: 19.06.2018 IT 201800006458
(43) Date of publication of application: 28.04.2021
(73) Proprietor: Can Srl, 36061 Bassano del Grappa (IT)
(72) Inventor: BELLINI, Mauro, 25015 Desenzano del Garda (BS) (IT)
(74) Representative: Maroscia, Antonio
(86) International application number: PCT/IB2019/055133
(87) International publication number: WO 2019/244053

(56) References cited:
- WO-A1-2018/234979
- DE-U1- 20 115 036
- FR-A1- 2 632 583
- TW-U- M 335 429
- US-A1- 2014 366 861

## Description

### Field of The Invention

The present invention generally finds application in the field of cooking apparatuses, and particularly relates to a removable kitchen for recreational vehicles such as a motor caravans or boats.

### Background art

Among cooking apparatus for motor caravans and boats, compact kitchens have long been used, which comprise a frame for supporting a hob with a plurality of burners.

These kitchens typically also include a sink for washing food and for hygienic operation by users.

The hob is generally installed in the furniture of the vehicle and forms an integral part of its interior space.

This arrangement reduces the exchange of the heat generated by the burners with the outside environment, thereby causing inconvenience for the activities in the vehicle, especially during the Summer.

In an attempt to obviate this prior art drawback, and to increase users' freedom of action, external kitchens have been conceived, which are designed for concealed installation in a service compartment on board the vehicle to be entirely or partially pulled out of such compartment.

The service compartment is generally formed on an outer side wall of the vehicle and the kitchen comprises a support element for supporting the hob and guide means for the support element to be temporarily slidingly pulled out of the compartment.

CN205800906 discloses a removable kitchen comprising a pair of support elements for supporting a sink and a hob respectively, installed in a service compartment of a recreational vehicle, between an idle retracted position and a work position deployed outside the compartment.

In addition, the two support elements can be stacked one on top of the other to reduce their bulk in the service compartment, and are supported by respective guide means, to be slidingly pulled out of the compartment.

One drawback of this prior art arrangement is that the burners and the sink are mounted to two separate support elements, which involves a considerably greater complexity of the guide means, and accordingly affects the stability of the kitchen in the deployed configuration.

A further drawback of this prior art arrangement is that the guide means are located at the sides of the support elements, which reduces the space available for any drawers or support areas.

US2014/366861 and FR2632583 also disclose removable kitchens comprising a pair of support elements for supporting a sink and/or a hob, installed in a service compartment of a recreational vehicle, between an idle retracted position and a work position deployed outside the compartment.

Nevertheless, due to the small size of this type of kitchens, the means for connection to the sources include conventional indoor connections, which do not comply with the European Standard EN30 concerning safety of domestic appliances.

An attempt to at least partially obviate these drawbacks was to conceive removable kitchens for concealed installation in the compartment of a vehicle have been developed in which the support element is coupled to a telescopic leg to stabilize the kitchen in the deployed configuration, as disclosed in TWM335429.

This arrangement also suffers from a drawback, in that the telescopic leg is stationary, whereby the kitchen cannot be independently operated.

A further drawback of this arrangement is the large size of the hob-supporting element, which requires special construction measures to be taken for folding the latter into the vehicle, as well as the provision of a large compartment, at the expense of the interior spaces of the vehicle.

Another drawback common to the above discussed prior art arrangements is that the removable kitchen cannot be installed once the vehicle has been put on the road.

Yet another drawback of these arrangements is that the kitchen can be only supplied with the power and water sources available on the vehicle.

### Technical Problem

In view of the prior art, the technical problem addressed by the present invention consists in improving the function of the kitchen and also allow operation thereof separately from and independently of the vehicle in which it is normally stowed.

### Disclosure of the invention

The object of the present invention is to obviate the above drawback, by providing a removable kitchen that is highly efficient and relatively cost-effective.

A particular object of the present invention is to provide a removable kitchen that may be operated independently of the recreational vehicle on which it is installed.

Another object of the present invention is to provide a removable kitchen that has a very reduced size and can be easily fabricated.

A further object of the present invention is to provide a removable kitchen that may be used in any operating condition and is easy and simple to use.

Yet another object of the present invention is to provide a removable kitchen that may be installed in a recreational vehicle even after putting the latter on the road.

These and other objects as more clearly explained below, are fulfilled by a removable kitchen as defined in claim 1, which is designed for concealed installation in a service compartment on board a recreational vehicle such a motor caravan or a boat.

The removable kitchen comprises a support element for supporting a hob with a plurality of burners and a sink with a faucet, as well as connection means for connection to respective sources for the burners and the faucet and guide means for the enclosure to be slidingly pulled out of the service compartment in the vehicle.

The support element is equipped with junction means for quick coupling/ uncoupling to/from the guide means, and coupling means for removably connecting a plurality of telescopic legs to the support element and allow the kitchen to be used when it rests on the ground, independently of the vehicle.

Furthermore, the support element comprises substantially vertical side walls, which are joined together by corner pieces, each having a lower end equipped with coupling means for connection to the upper end of a respective telescopic leg.

With this combination of features, the kitchen can be coupled or uncoupled to/from the guide means, and be used as a field kitchen, using the telescopic legs, in a separate area, e.g. under a tent, or in a room that is far from the vehicle.

As defined in claim 10, the kitchen comprises substantially cylindrical supports integrated with the support element allowing the kitchen to rest on a horizontal surface when it is disconnected from the guide means and from the telescopic legs.

Advantageous embodiments of the invention are obtained in accordance with the dependent claims.

### Brief Description of The Drawings

Further features and advantages of the invention will be more apparent from the detailed description of a preferred, non-exclusive embodiment of a removable kitchen of the invention, which is described as a non-limiting example with the help of the following drawings, in which:
FIGS. 1 and 2 are perspective views of a fully assembled removable kitchen of the invention in first and second operating configurations respectively;
FIG. 3 is a further perspective view of the removable kitchen of Fig. 2;
FIG. 4 is a perspective view of the fully assembled removable kitchen in a third operating configuration;
FIG. 5 is a perspective view of the removable kitchen of Fig. 2, in a partially uncoupled configuration;
FIG. 6 is a perspective view of a detail of the removable kitchen of Fig. 4;
FIG. 7 is an exploded perspective view of the removable kitchen of Fig. 4 and its main parts;

### Detailed description of a preferred exemplary embodiment

Particularly referring to the figures, there is shown a removable kitchen of the invention, generally designated by numeral 1, which is designed for concealed installation in a service compartment 2 formed on board a recreational vehicle, which is not entirely shown in the figures.

As a non-limiting example, the vehicle may be a wheeled vehicle such as a motor caravan, a camping trailer or the like, or a pleasure boat, generally having a cabin.

The service compartment 2 may be formed in an outer wall W of the vehicle or the boat and may be closed by an automatically or mechanically controlled door 3.

The compartment 2 may comprise an approximately prismatic cavity, adapted to accommodate a matingly shaped kitchen 1, with the longer dimension extending in a longitudinal direction X.

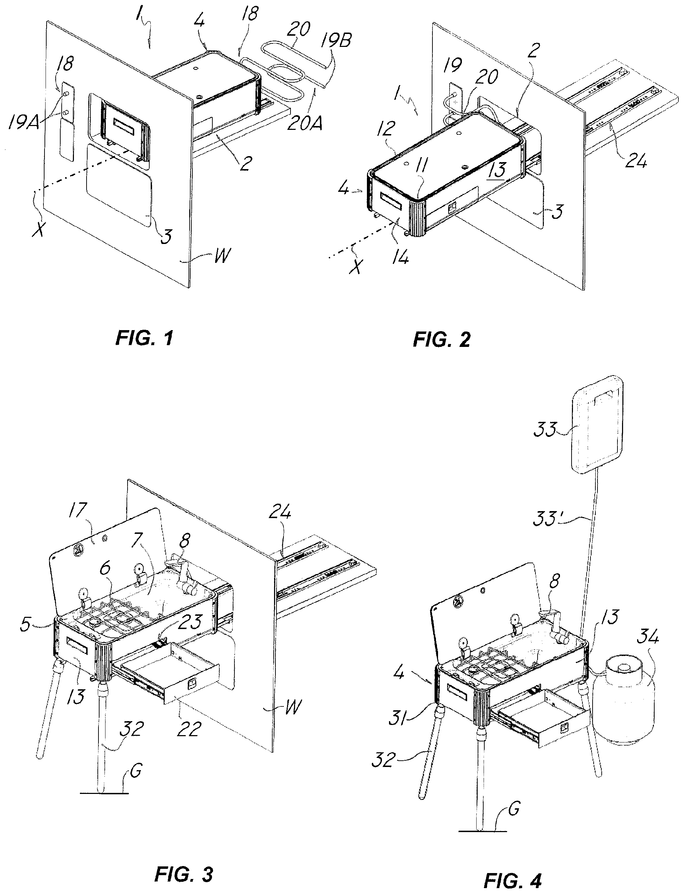

As shown in FIGS. 1 and 2, the kitchen 1 can be pulled out of the vehicle to move from a first idle configuration in which the kitchen 1 fits in the service compartment 2 to a second work configuration in which the kitchen 1 is located outside the compartment 2.

As shown in the figures, the kitchen 1 comprises a support element 4 which is adapted to support a hob 5 with a plurality of burners 6 and a sink 7 having a faucet 8.

In the illustrated embodiment, the support element 4 comprises a base plate 9, preferably made of metal, having a first end portion 9' for receiving the burners 6 and a second end portion 9" that is specially shaped to form the form the bowl 10 of the sink 7.

The base plate 9 may have a substantially rectangular plan shape with corners 11 and with a peripheral rim 12.

Furthermore, the support element 4 comprises substantially vertical side walls 13 which are peripherally coupled to the base plate 9 at the peripheral rim 12 thereof to define a box-like enclosure 14.

Conveniently, each side wall 13 may comprise a pair of suitably shaped and folded connecting flaps 15 for connection with the other side walls 13 of the box-like enclosure 14 by appropriate screw or rivet connection means 16.

In an alternative embodiment, not shown, the support element 4 may be formed from a single appropriately folded metal element providing the side walls 13 and a bottom plate designed to join the side walls 13 together.

Furthermore, a removable protective cover 17 may be placed above the base plate 9 and be hinged to one side of the peripheral rim 12.

The kitchen 1 may comprise connection means 18 for connection to respective sources, such as a gas hose for the burners 6 and a plastic hose for the faucet 8, as further described below.

To assist connection of the removable kitchen 1 to the sources, the connection means 18 may comprise quick connectors 19, for quick ad safe disconnection and connection to the sources.

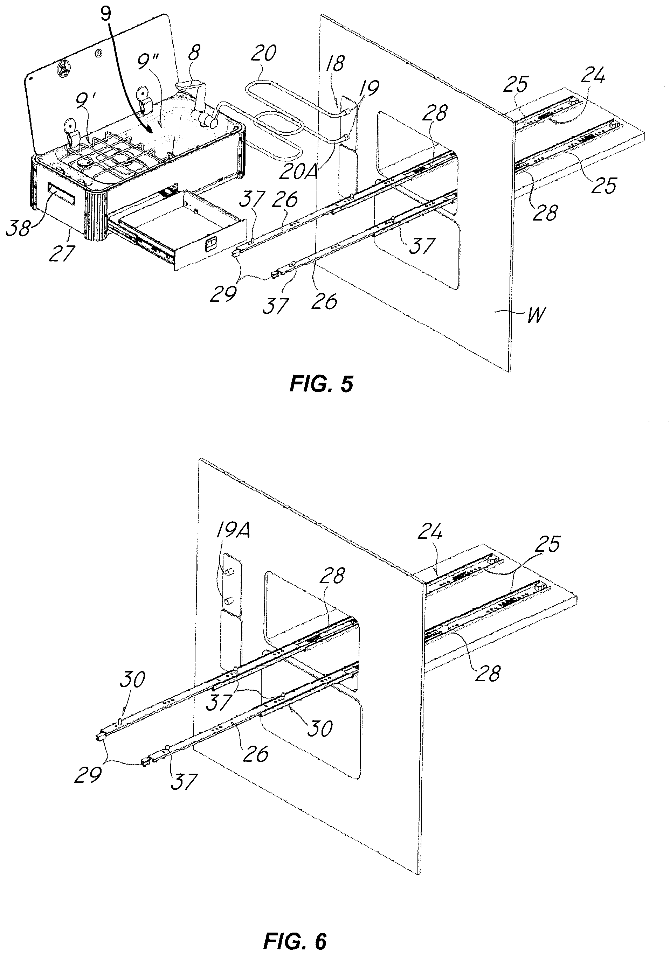

As best shown in FIGS. 2 and 5, the quick connectors 19 may be of the press-fit type and may comprise a female coupler 19a on the outer wall W of the vehicle or the boat and a corresponding male coupler 19b at a first end 20a of the hose 20.

Furthermore, the hose 20 may comprise a second end 20b, which is connected in fluid communication to the faucet 8 or the burners 6 using conventional couplers, e.g. screw couplers.

Valve units, not shown, may be possibly provided for central connection of gas and water hoses.

Conveniently, one of the side walls 13 may comprise a pair of holes 21 which are designed to facilitate the passage of each hose 20 to connect the burners 6 and the sink 7 to their respective sources.

The holes 21 may have a substantially circular shape and be arranged on the side wall 13 that faces the service compartment 2.

Furthermore, at least one side wall 13 of the box-like enclosure 14 may comprise a removable drawer 22 fitting in a corresponding seat 23 located below the first end portion 9' of the base plate 9 that incorporates the burners 6. The drawer 22 may be pulled out by sliding or using guides of well-known type.

Advantageously, the removable kitchen 1 comprises guide means 24 for the support element 4 to be slidingly pulled out of the service compartment 2 of the vehicle and moved from the first configuration to the second configuration.

The guide means 24 may comprise at least one pair of rails 25 parallel to each another and to the direction X, which can be secured to the vehicle in the service compartment 2 and at least one pair of sliders 26 secured to the lower part 27 of the support element 4 and slidingly coupled in the at least one pair of rails 25, as shown in FIG. 6.

In addition, the rails 25 and the sliders 26 may slidingly coupled to each other with the interposition of an intermediate sliding member 28 to form a telescopic guide having an adjustable length.

Advantageously, the rails 25, the sliders 26 and the intermediate members 28 may be slidably coupled with the interposition of a plurality of suitably lubricated ball bearings, not shown.

According to a preferred embodiment of the invention, as shown in the figures, the guide means 24 and the rails 25, the sliders 26 and the intermediate members 28 may be mounted parallel to the base plate 9, to reduce the size of the support element 4.

In alternative embodiments of the invention, the guide means 24 may be parallel to the vertical side walls 13 or inclined thereto at a predetermined angle, to thereby improve the stability of the support element 4 in the deployed configuration, i.e. with the kitchen 1 in the second operating configuration.

Conveniently, each of the sliders 26 may comprise a lever-operated stop member 29 at its end, which is operable from the outside to selectively lock the position of each slider 26 relative to the corresponding intermediate member 28.

In a peculiar aspect of the invention, junction means 30 are provided, for quick coupling/uncoupling of the support element 4 to/from the guide means 24.

In addition, coupling means 31 are provided for removably connecting a plurality of, preferably four, telescopic legs 32 to the support element 4, preferably at its corners 11, for the kitchen 1 to be used when it rests on the ground G, independently of the vehicle.

Thus, the removable kitchen 1 may move from an operating configuration in which the box-like enclosure 14 is coupled to the guide means, 24 to another operating configuration in which the kitchen 1 is totally separate and independent of the vehicle.

In this additional operating configuration, as shown in FIG. 4, the source for the faucet 8 may be placed at a height from the ground G that is sufficient to ensure the flow of liquid to the faucet 8 and may be contained in a bag 33 equipped with a water supply hose 33'.

Likewise, the source for the burners 6 may be contained in a camping gas bottle 34 suitably connected to the burners 6.

The bag 33 and the bottle 34 may be connected to the kitchen 1 using the same quick connectors 18 and the same hoses 20 as described above.

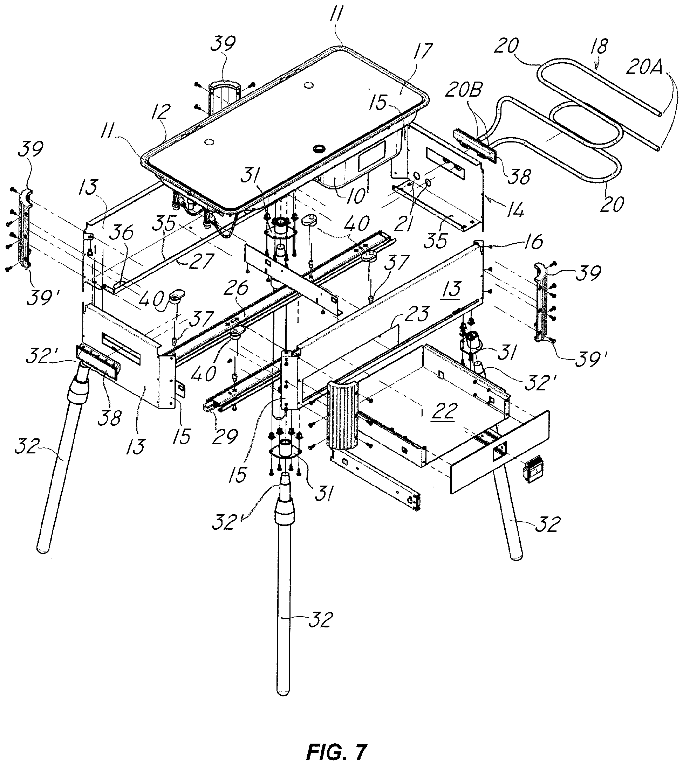

As best shown in FIG. 7, the substantially vertical side walls 13 may comprise a substantially L-shaped cross section with substantially horizontal folded lower rims 35.

The lower rims 35 may comprise elongate holes and openings 36 for receiving junction means 30 in the form of pins 37 or similar junction members for removable connection of the support element 4 to the sliders 26.

The pins 37 may have a substantially cylindrical shape with a vertical axis Z and a base rigidly joined to the sliders 26 to facilitate coupling and/or uncoupling of the support element 4 to/from the guide means 24.

In an alternative embodiment of the invention, not shown, the pins 37 may be operably connected to control means operable by the user for quick coupling and uncoupling of the support element 4 to/from the guide means 24.

Furthermore, at least one side wall 13 of the box-like enclosure 14 may comprise a handle 38 for easier grip by the user during the steps of coupling and uncoupling the kitchen 1 to/from the guide means 24, particularly in the second and third operating configurations.

According to a further peculiar aspect of the invention, the side walls 13 are joined together by means of corner pieces 39 having a lower end 39' equipped with appropriate coupling means 31 for quick connection of the upper end 32' to a respective telescopic leg 32, as best shown in FIG. 7.

Furthermore, each corner piece 39 may be coupled to the side walls 13 by means of rivets or screws at the connecting flaps 15 and may be formed of a plastic material, with the function of protecting the box-like enclosure 14 and preventing thefts.

In a preferred embodiment of the invention, the quick connectors 31 may comprise an internally threaded cavity for engaging the externally threaded upper ends 32 of each of the telescopic legs 32.

Thus, the user may uncouple the support element 4 from the guide means 24 and the from the connection means 18 and later attach the telescopic legs 32 to the corresponding corner pieces 39 to be able to use the kitchen 1 as a a field kitchen, independent of the vehicle.

Nevertheless, it should be noted that the telescopic legs 32 may be also attached to the corresponding coupling means 31 in the second operating configuration in which the box-like enclosure 14 is coupled to the guide means, 24 to improve the stability of the kitchen 1 during cooking operations, as shown in FIG. 3.

In a further aspect of the invention, the pins 37 may be accommodated in corresponding substantially cylindrical supports 40 rigidly joined to the substantially horizontal folded lower rims 35 of the side walls 13 to allow the box-like enclosure 14 to rested on a horizontal surface when the kitchen 1 is uncoupled from the guide means 24 and from the telescopic legs 32.

It will be appreciated from the foregoing that the removable kitchen fulfills the intended objects and particularly provides many functions and may be also used independently of and separately from the vehicle.

While the removable kitchen has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in the field of kitchen appliances.

## Claims

1. A removable kitchen (1) designed for concealed installation in a service compartment (2) formed on board a recreational vehicle, such as a motor caravan or a pleasure boat, said kitchen (1) comprising:
- a support element (4) for supporting a hob (5) with a plurality of burners (6) and a sink (7) having a faucet (8);
- connection means (18) for connection to respective sources for said burners (6) and said faucet (8);
- guide means (24) for said element (4) to be slidingly extractable from the service compartment (2) of the vehicle;
**characterized in that** it comprises junction means (30) for quick coupling/uncoupling of said support element (4) to/from said guide means, (24), as well as coupling means (31) for removably connecting a plurality of telescopic legs (32) with said support element (4) and allowing the kitchen (1) to be used when resting on the ground (G) independently of the vehicle, said support element (4) having substantially vertical side walls (13) joined together by corner pieces (39), each of said corner pieces (39) having a lower end (39') equipped with said coupling means (31) for connection to the upper end (32') of a respective telescopic leg (32).

2. Kitchen as claimed in claim 1, **characterized in that** said guide means (24) comprise at least one pair of parallel rails (25), adapted to be secured to the vehicle in said service compartment (2) and at least one pair of sliders (26) secured to the lower part (27) of said support element (4) and slidingly coupled in said at least one pair of rails (25).

3. Kitchen as claimed in claim 2, **characterized in that** each of said rails (25) and each of said sliders (26) are slidingly coupled to each other with the interposition of an intermediate sliding member (28) to form a telescopic guide having an adjustable length.

4. Kitchen as claimed in claim 3, **characterized in that** each of said sliders (26) comprises a lever-operated lock element (29) operable from the outside to selectively lock the position of each slider (26) relative to the corresponding intermediate member (28).

5. Kitchen as claimed in claim 1, **characterized in that** said support element (4) comprises a base plate (9), having a first end portion (9') for receiving the burners (6) and a second end portion (9") that is specially shaped to form the form the bowl (10) of the sink (7).

6. Kitchen as claimed in claim 1, **characterized in that** said substantially vertical side walls (13) are peripherally coupled to said base plate (9) to define a box-like enclosure (14) with the latter.

7. Kitchen as claimed in claim 1, **characterized in that** said substantially vertical side walls (13) comprise substantially horizontal folded lower rims (35), said lower rims (35) having elongated holes and openings (36) for receiving corresponding pins (37) or similar junction members for removable connection of said support element (4) to said sliders (26).

8. Kitchen as claimed in claim 5, **characterized in that** at least one side wall (13) comprises at least one removable drawer (22) which fits into a seat (23) located below said first end portion (9') of said base plate (9) which incorporates said burners (6).

9. Kitchen as claimed in claim 1, **characterized in that** said coupling means (31) comprise an internally threaded cavity for engaging said externally threaded upper ends (32') of each of said telescopic legs (32).

10. Kitchen as claimed in claim 7, **characterized in that** said pins (37) are accommodated in corresponding substantially cylindrical supports (40) which are rigidly joined to said lower rims (35) of said side walls (13) to allow said box-like housing (14) to rest on a horizontal surface when said kitchen (1) is uncoupled from said guide means (24) and from said telescopic legs (32).

11. Kitchen as claimed in claim 1, **characterized in that** said connection means (18) comprise quick connectors (19) for connection to respective sources for said burners (6) and said faucet (8).

## Patentansprüche

1. Herausnehmbare Küche (1) zum verdeckten Einbau in ein Servicefach (2), das an Bord eines Freizeitfahrzeugs, wie eines Wohnwagens oder eines Freizeitboots, ausgebildet ist, wobei die Küche (1) umfasst:
- ein Stützement (4) zum Tragen eines Kochfelds (5) mit mehreren Brennern (6) und einer Spüle (7) mit einem Wasserhahn (8);
- Verbindungsmittel (18) zum Verbinden mit entsprechenden Quellen für die Brenner (6) und den Wasserhahn (8);
- Führungsmittel (24), damit das Element (4) gleitend aus dem Servicefach (2) des Fahrzeugs herausziehbar ist;
**dadurch gekennzeichnet, dass** es Verbindungsmittel (30) zum schnellen Kuppeln/Entkuppeln des Stützelements (4) an/von den Führungsmitteln (24) aufweist, und weiter Kopplungsmittel (31) aufweist, um einer Vielzahl von Teleskopbeinen (32) mit dem Stützelement (4) lösbar zu verbinden und die Nutzung der Küche (1) auf dem Boden (G) unabhängig vom Fahrzeug zu ermöglichen, wobei das Stützelement (4) im Wesentlichen vertikale Seitenwände (13) aufweist, die durch Eckstücke (39) miteinander verbunden sind, wobei jedes der Eckstücke (39) ein unteres Ende (39') aufweist, das mit den Kopplungsmitteln (31) zur Verbindung mit dem oberen Ende (32') eines jeweiligen Teleskopbeins (32) ausgestattet ist.

2. Küche nach Anspruch 1, **dadurch gekennzeichnet, dass** die Führungsmittel (24) mindestens ein Paar paralleler Schienen (25) umfassen, die am Fahrzeug in dem Servicefach (2) befestigt werden können, und mindestens ein Paar von Gleiter (26), die an dem unteren Teil (27) des Stützelements (4) befestigt sind und gleitend mit dem mindestens einen Paar Schienen (25) verbunden sind.

3. Küche nach Anspruch 2, **dadurch gekennzeichnet, dass** jede der Schienen (25) und jeder der Gleiter (26) unter Zwischenschaltung eines Zwischengleitelements (28) gleitend miteinander gekoppelt sind, um eine Teleskopführung mit einer einstellbaren Länge zu bilden.

4. Küche nach Anspruch 3, **dadurch gekennzeichnet, dass** jeder der Schieber (26) ein hebelbetätigtes Verriegelungselement (29) umfasst, das von außen betätigbar ist, um die Position jedes Schiebers (26) relativ zu dem entsprechenden Zwischenelement selektiv zu verriegeln (28).

5. Küche nach Anspruch 1, **dadurch gekennzeichnet, dass** das Stützelement (4) eine Grundplatte (9) umfasst, die einen ersten Endabschnitt (9') zur Aufnahme der Brenner (6) und einen zweiten Endabschnitt (9") aufweist, der speziell geformt ist, um die Form des Beckens (10) der Spüle (7) zu bilden.

6. Küche nach Anspruch 1, **dadurch gekennzeichnet, dass** die im Wesentlichen vertikalen Seitenwände (13) peripher mit der Grundplatte (9) verbunden sind, um mit dieser eine kastenartige Umhüllung (14) zu bilden.

7. Küche nach Anspruch 1, **dadurch gekennzeichnet, dass** die im Wesentlichen vertikalen Seitenwände (13) im Wesentlichen horizontal gefaltete untere Ränder (35) aufweisen, wobei die unteren Ränder (35) Langlöcher und Öffnungen (36) zur Aufnahme entsprechender Stifte (37) oder ähnliche Verbindungselemente zur lösbaren Verbindung des Stützelements (4) mit den Gleitstücken (26) aufweisen.

8. Küche nach Anspruch 5, **dadurch gekennzeichnet, dass** mindestens eine Seitenwand (13) mindestens eine herausnehmbare Schublade (22) umfasst, die in einen Sitz (23) passt, der sich unterhalb des ersten Endabschnitts (9') der Grundplatte (9) befindet, das die Brenner (6) enthält.

9. Küche nach Anspruch 1, **dadurch gekennzeichnet, dass** die Kopplungsmittel (31) einen mit Innengewinde versehenen Hohlraum zum Eingriff mit den mit Außengewinde versehenen oberen Enden (32') jedes der Teleskopbeine (32) umfassen.

10. Küche nach Anspruch 7, **dadurch gekennzeichnet, dass** die Stifte (37) in entsprechenden im Wesentlichen zylindrischen Trägern (40) aufgenommen sind, die starr mit den unteren Rändern (35) der Seitenwände (13) verbunden sind, um zu ermöglichen, dass das kastenartige Gehäuse (14) auf einer horizontalen Fläche ruht, wenn die Küche (1) von den Führungsmitteln (24) und von den Teleskopbeinen (32) entkoppelt ist.

11. Küche nach Anspruch 1, **dadurch gekennzeichnet, dass** die Verbindungsmittel (18) Schnellverbinder (19) zum Anschluss an entsprechende Quellen für die Brenner (6) und den Wasserhahn (8) umfassen.

## Revendications

1. Cuisine amovible (1) destinée à être installée de manière dissimulée dans un compartiment de service (2) formé à bord d'un véhicule de plaisance, tel qu'un camping-car ou un bateau de plaisance, ladite cuisine (1) comprenant:
- un élément de support (4) pour supporter une plaque de cuisson (5) avec une pluralité de brûleurs (6) et un évier (7) ayant un robinet (8);
- des moyens de connexion (18) pour la connexion aux sources respectives desdits brûleurs (6) et dudit robinet (8);
- des moyens de guidage (24) pour ledit élément (4) à extraction coulissante du compartiment de service (2) du véhicule;
**caractérisé en ce qu'**il comprend des moyens de jonction (30) pour un couplage/découplage rapide dudit élément de support (4) à/de desdits moyens de guidage (24), ainsi que des moyens de couplage (31) pour relier de manière amovible une pluralité de pieds télescopiques (32) avec ledit élément de support (4) et permettant d'utiliser la cuisine (1) en appui au sol (G) indépendamment du véhicule, ledit élément de support (4) présentant des parois latérales (13) sensiblement verticales réunies par des pièces d'angle (39), chacune desdites pièces d'angle (39) ayant une extrémité inférieure (39') équipée desdits moyens d'accouplement (31) pour la connexion à l'extrémité supérieure (32') d'un pied télescopique respectif (32).

2. Cuisine selon la revendication 1, **caractérisée en ce que** lesdits moyens de guidage (24) comprennent au moins une paire de rails parallèles (25), adaptés pour être fixés au véhicule dans ledit compartiment de service (2) et au moins une paire de curseurs (26) fixés à la partie inférieure (27) dudit élément de support (4) et couplés de manière coulissante dans ladite au moins une paire de rails (25).

3. Cuisine selon la revendication 2, **caractérisée en ce que** chacun desdits rails (25) et chacun desdits curseurs (26) sont couplés coulissants l'un à l'autre avec interposition d'un élément coulissant intermédiaire (28) pour former un guide télescopique ayant une longueur réglable.

4. Cuisine selon la revendication 3, **caractérisée en ce que** chacun desdits curseurs (26) comprend un élément de verrouillage à levier (29) actionnable de l'extérieur pour verrouiller sélectivement la position de chaque curseur (26) par rapport à l'élément intermédiaire correspondant (28).

5. Cuisine selon la revendication 1, **caractérisée en ce que** ledit élément de support (4) comprend une plaque de base (9), ayant une première portion d'extrémité (9') pour recevoir les brûleurs (6) et une deuxième portion d'extrémité (9") qui est spécialement conformé pour former la cuvette (10) de l'évier (7).

6. Cuisine selon la revendication 1, **caractérisée en ce que** lesdites parois latérales sensiblement verticales (13) sont couplées périphériquement à ladite plaque de base (9) pour définir une enceinte en forme de boîte (14) avec cette dernière.

7. Cuisine selon la revendication 1, **caractérisée en ce que** lesdites parois latérales sensiblement verticales (13) comportent des rebords inférieurs pliés sensiblement horizontaux (35), lesdits rebords inférieurs (35) présentant des trous oblongs et des ouvertures (36) pour recevoir des broches correspondantes (37) ou des éléments de jonction similaires pour la connexion amovible dudit élément de support (4) auxdits curseurs (26).

8. Cuisine selon la revendication 5, **caractérisée en ce qu'**au moins une paroi latérale (13) comprend au moins un tiroir amovible (22) qui s'emboîte dans un siège (23) situé en dessous de ladite première portion d'extrémité (9') de ladite plaque de base (9) qui incorpore lesdits brûleurs (6).

9. Cuisine selon la revendication 1, **caractérisée en ce que** lesdits moyens d'accouplement (31) comprennent une cavité filetée intérieurement pour engager lesdites extrémités supérieures filetées extérieurement (32') de chacun desdits pieds télescopiques (32).

10. Cuisine selon la revendication 7, **caractérisée en ce que** lesdites broches (37) sont logés dans des supports (40) sensiblement cylindriques correspondants qui sont solidarisés auxdits rebords inférieurs (35) desdites parois latérales (13) pour permettre à ladite enceinte en forme de boîte (14) de reposer sur une surface horizontale lorsque ladite cuisine (1) est désaccouplée desdits moyens de guidage (24) et desdits pieds télescopiques (32).

11. Cuisine selon la revendication 1, **caractérisée en ce que** lesdits moyens de connexion (18) comprennent des connecteurs rapides (19) pour la connexion à des sources respectives desdits brûleurs (6) et dudit robinet (8).
